# EUROPEAN PATENT SPECIFICATION

(11) **EP 1 241 364 B1**
(45) Date of publication and mention of the grant of the patent: **16.08.2006**
(21) Application number: 02005779.0
(22) Date of filing: 13.03.2002
(51) Int. Cl.: F16B 39/00, F16B 39/30, F16B 39/34, F16B 39/02

(54) **Bolt and method of clamping members using the same**
Bolzen und diesen verwendendes Verfahren zum Spannen von Bauteilen
Boulon et procédé utilisant ledit boulon pour assembler des pièces

(30) Priority: 13.03.2001 JP 2001069744
(43) Date of publication of application: 18.09.2002
(73) Proprietor: AOYAMA SEISAKUSHO CO., LTD., Nagoya-shi, Aichi-ken (JP)
(72) Inventor: Kondo, Shinichi, Ohguchi-cho, Niwa-gun, Aichi-ken (JP); Ozawa, Junzo, Ohguchi-cho, Niwa-gun, Aichi-ken (JP); Mizuno, Masataka, Ohguchi-cho, Niwa-gun, Aichi-ken (JP); Aoyama, Kazutaka, Ohguchi-cho, Niwa-gun, Aichi-ken (JP)
(74) Representative: Betten & Resch

(56) References cited:
- GB-A- 566 254
- GB-A- 1 134 375
- US-A- 2 956 293
- US-A- 3 182 703
- US-A- 4 768 908
- US-A- 6 135 689

## Description

### FIELD OF THE INVENTION

The invention relates to a bolt and method of clamping members by the same.

### BACKGROUND OF THE INVENTION

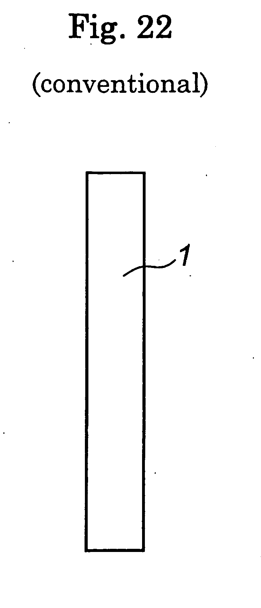

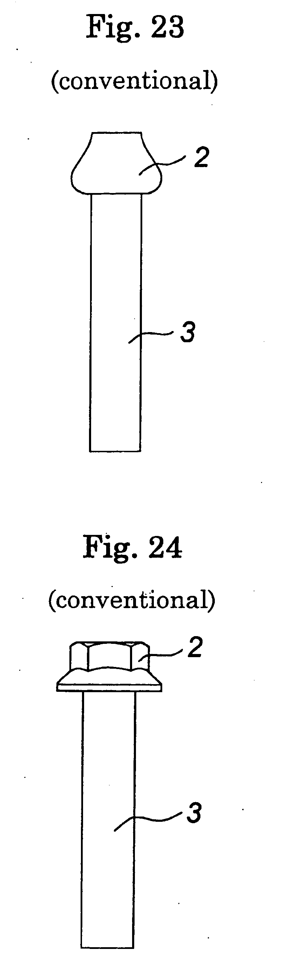

Typical methods of manufacturing bolts include a j method using a part former such as cold forging machine, warm forging machine or the like, and comprising a multiplicity of forming steps. In particular, cold forging has been frequently made use of in terms of dimensional accuracy. Figs. 22 to 24 are views illustrating the outline of bolt forming steps. The forming steps comprise a first step (Fig. 22) of cutting to a desired length a bar wire 1, which is formed by drawing a bolt material such as steel or the like to a desired dimension with accurate roundness, a second step (Fig. 23) for performing one end of the bar wire 1 by striking a die to form a bolt head 2 on one end thereof, and a third step (Fig. 24) for using the die to form the bolt head 2 into a final shape. Further, rolling is used to form a external thread on a bolt shank 3. Although the forming steps comprise three steps in the example, an actual bolt forming comprises a multiplicity of steps to manufacture of bolts having a complex configuration. However, since a bolt head 2 is gradually hardened by work hardening as the steps proceed, hardness is increased in the bolt head 2 as finally finished.

Here, for example, automobiles use many kinds of and a multiplicity of bolts such as cylinder head bolt, connecting rod bolt, and clamping bolt for flywheels. When these bolts are increased in strength, they can be made small in size and also lightweight. Small-sizing of bolts produces spatial margin, of which can be made effective use to improve, for example, the engine performance. Accordingly, demand has been made for a further increased strength than heretofore in bolts used in automobiles or the like.

High-strength bolts are archived by adding large amounts of alloying elements to steel for an increase in anneal softening resistance or work hardening by cold drawing a hot-rolled bar steel at high reduction of area. However, the former has increased deformation resistance and degraded deformability because large amounts of alloying elements are contained to be unable to be adequately softened in softening resistance such as spheroidizing annealing or the like. Also, the latter has also increased deformation resistance and degraded deformability because work hardening is increased as the reduction of area becomes high. Therefore, the above-mentioned bolt forming steps have incurred disadvantages that a bolt head 2 is liable to be cracked and cannot be formed into a desired shape because the bolt head 2 is gradually hardened by work hardening as the forming proceed. Further, forming dies such as punch, die and the like cause serious problems that they are liable to wear or crack to be deceased in service life. In this manner, various harmful influences will be incurred in forming steps as bolts are increased in strength, so that there have been conventionally limitations on forming of high-strength bolts by means of, in particular, cold forging. Accordingly, it has been difficult to make bolts adequately small-sized and lightweight by means of high-strengthened bolts.

The invention solves the above-mentioned problems of prior arts and provides a high-strength bolt, which has been conventionally difficult to manufacture due to large deformation resistance. Also, the invention provides a method of clamping members using such high-strength bolt. In the invention, a high-strength bolt means a bolt having the strength of 700 N/mm² or more. In particular, when the invention is applied to a bolt having the strength of 1000 N/mm² or more, it becomes further conspicuous in effect.

US Patent 6,135,689 describes a self-locking bolt wherein crests of respective threads of a part of a group of threads are deformed to provide a group of lock portions so that the respective threads have a closs section of a trapezoidal-shape over an arcuate region of 10 to 40 degrees about an axis of the self-locking bolt in a cross section perpendicular to the axis.

### SUMMARY OF THE INVENTION

A bolt according to the invention to solve the above-mentioned problems comprises a bolt comprising a bolt shank formed at an outer peripheral surface thereof with external threads, and a nut acting as a bolt head and formed at an inner peripheral surface thereof with internal threads and having a torque transmitting portion at an outer surface thereof comprising: a latch means for latching the nut with the bolt shank, which is provided on at least one of the bolt shank and the nut, the nut being separatable from the bolt shank and capable of being screwed onto the bolt shank, wherein the nut is movable relative to the bolt shank in a state of being screwed onto the bolt shank, when a larger torque than a predetermined torque is applied to the nut while the latch means latches the nut with the bolt shank.

Since the nut is "separatable from the bolt shank", the bolt shank can be manufactured from a bar wire having a predetermined length, by rolling to form external threads. Also, the bolt shank can be fabricated without the bolt head, that is, the bolt head is not integrated with the bolt shank, the bolt shank can be made higher in strength than conventional ones. Moreover, since the bolt shank and the nut constituting the bolt head can be manufactured .. separately from each other, a material for nuts can be increased in freedom of deformation at the time of formation of nuts. Also, it is possible to reduce deformation resistance of a material for nuts. Further, since the nut can be fabricated separately from the bolt shank, the working pressure on the bolt shank and the working pressure on the nut can be made different from each other. In particular, when the nut is fabricated with a less working pressure thereon, a forming die for formation of nuts can be also extended in service life.

Also, since "a latch means for latching the nut with the bolt shank" is provided, the bolt with the nut latched on the bolt shank can be handled in the same manner as ordinary bolts, and the bolt screwing work can be easily made without the need of any special tool. Management of parts can be easily made since the bolt can be handled in the same manner as conventional bolts when the nut is latched on the bolt shank.

Further, since "the nut is movable relative to the bolt shank in a state of being screwed onto the bolt shank, when a larger torque than a predetermined torque is applied to the nut", the nut can be seated on members in a state, in which the nut is screwed onto the bolt shank, and correctly clamp the members through the bolt shank in spite of the constitution, in which the above-mentioned nut and the bolt shank are separate from each other.

Also, a bolt clamping method according to the invention is a method of using a bolt to clamp a first member formed with a bolt insertion hole extending therethrough and a second member formed with an internally threaded hole having a bottom, the bolt comprising a nut and a bolt shank described in any one of claims 1 to 16, the nut being latched on the bolt shank, the method comprising: a step for applying a torque on the nut until the bolt shank is screwed into the internally threaded hole of the second member through the bolt insertion hole of the first member to have a tip end of the bolt shank reaching the bottom, and a step for moving the nut relative to the bolt shank in a state, in which the nut is screwed onto the bolt shank, and for applying a torque on the nut until the nut reaches the first member.

With the clamping method, the nut can be seated on the first member in a state, in which the nut is screwed onto the bolt shank, and clamping of the first member and the second member through the bolt shank can be correctly accomplished.

### BRIEF DESCRIPTION OF THE DRAWINGS

Fig. 1 is a perspective view showing a bolt composed of a nut and a bolt shank according to the invention;
Fig. 2 is a front view showing the bolt of the invention;
Fig. 3 (a) is a cross sectional view showing normal screw threads in cross section, (b) being a cross sectional view showing deformed screw threads in cross section;
Fig. 4 is an enlarged, cross sectional view showing a change in forming the deformed screw threads from the normal screw threads;
Fig. 5 is a cross sectional view showing a state, in which a nut is latched to a bolt shank having deformed screw thread;
Fig. 6 is a fragmentary, enlarged cross sectional view showing a bolt shank having a regular pitch region and an irregular pitch region;
Fig. 7 is a fragmentary, enlarged cross sectional view showing a nut formed with internal threads at regular pitch;
Fig. 8 is partial, cross sectional view showing pitch deviation between external threads of a bolt shank and internal threads of a nut;
Fig. 9 is a fragmentary, enlarged cross sectional view showing a bolt shank having an irregular diameter region where screw thread having an increased thread root diameter are formed;
Fig. 10 is a fragmentary, enlarged cross sectional view showing a bolt shank having a resin layer formed on screw threads;
Fig. 11 is a fragmentary, enlarged cross sectional view showing a bolt shank having an irregular film thickness region formed on screw threads;
Fig. 12 (a) is a front view showing an example of a caulking nut, (b) being a side view;

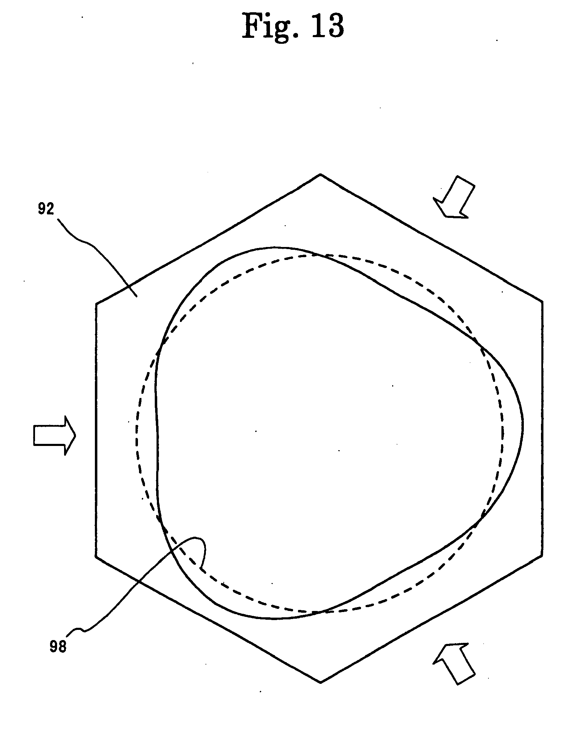

Fig. 13 is an enlarged, front view showing an effective diameter of internal threads deformed upon application of forces on a hexagonal portion of the caulking nut;
Fig. 14 is an enlarged, front view showing a state, in which the caulking nut is latched to a bolt shank;
Fig. 15 is a fragmentary, cross sectional view showing a bolt of the invention in the course of clamping a mounted member on a mount member with the use of the bolt;

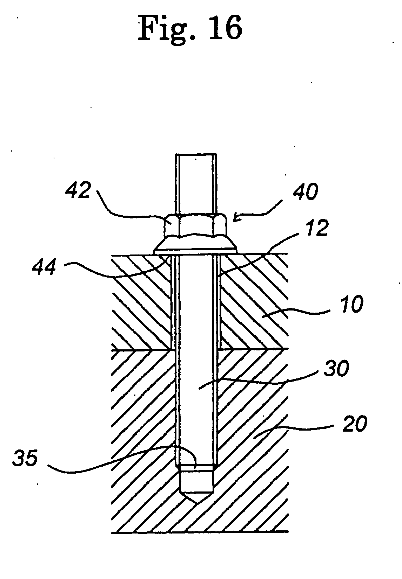

Fig. 16 is a fragmentary, cross sectional view showing the bolt of the invention when the mount member has been clamped to the mounted member;
Fig. 17 is a side view showing a bolt shank having a thread non-formed region;
Fig. 18 is a side view showing a state, in which a nut is latched to a bolt shank having a thread non-formed region;
Fig. 19 is a cross sectional view showing a state, in which a bolt shank is screwed into a internal thread hole of a nut;
Fig. 20 is a cross sectional view showing a state, in which a lower end of the thread non-formed region of the bolt shank abuts against an upper surface of the nut;
Fig. 21 is a cross sectional view showing a state, in which the bolt shank and the nut are released from a latched condition, a seat surface of the bolt head is seated on an upper surface of a third member, and the third member is latched on a fourth member;
Fig. 22 is a front view showing a bolt material cut to a desired length;
Fig. 23 is a front view showing a bolt material, in which a bolt head is preformed; and
Fig. 24 is a front view showing a bolt material, in which the bolt head is finally formed.

### DESCRIPTION OF THE PREFERRED EMBODIMENTS

A preferred embodiment of the invention will be illustrated with reference to the drawings.

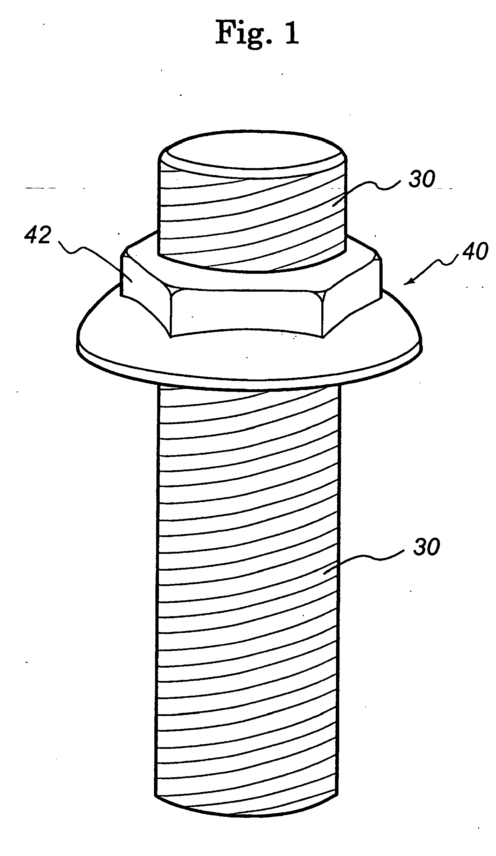

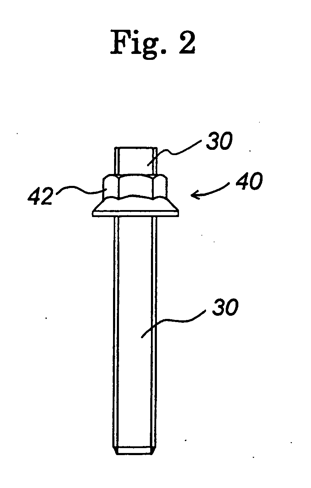

Figs. 1 and 2 are views showing a bolt according to the present invention. A bolt shank 30 and a nut 40 are beforehand formed separately. The nut 40 acts as a bolt head when latched on the bolt shank 30. A hexagonal nut portion 42 is provided on an upper portion of the nut 40. The nut 40 is screwed on or near an end of the bolt shank 30 to be latched to the bolt shank 30 by a latch means (not shown) described later.

While Figs. 1 and 2 exemplarily show a hexagonal nut portion 42 as a torque transmitting portion which transmits torque to the bolt shank 30, the shape of the torque transmitting portion is not limited to hexagonal if torque can be transmitted.

The bolt shank 30 is generally formed from a bar wire having been drawn at around 15 % of hot-rolled bar. After the drawn bar wire is cut to a desired length, rolling is used to form external threads on an outer peripheral surface of the bar wire, and then heat treatment such as quenching, and tempering is applied. This manufacturing step of the bolt shank 30 eliminates the need of forming a bolt head from a bar wire. Since the bolt shank 30 is formed separately from the nut 40 in this manner, it is possible to use as a material for the bolt shank 30 a bar wire having a higher strength than that of a conventional bar wire to form a bolt head and a bolt shank are formed integrally. Thus, a bar wire, to which large amounts of alloying elements are added, can be used. As a result, the bolt shank 30 after heat treatment can be made greatly higher than conventional ones.

In addition, as described later, external threads are not formed entirely on a bolt shank in an axial direction but may be partly formed on the bolt shank. For example, a bolt shank is formed such that two external thread forming regions including a external thread forming region for screwing of the bolt shank into a mount member (not shown) and a external thread forming region for screwing of a nut on the bolt shank are separated from each other. In the case where such bolt shank is formed, a thread non-forming region where external threads are not formed will be present between the two external thread forming regions.

Also, a bar wire, of which strength is increased by application of drawing at the reduction of area of 50 % or higher, can be used as a material for the bolt shank 30. Drawing can manufacture a high-strength bolt shank 30, in which fiber structure is elongated in an axial direction of the bar wire, resulting in an excellent resistance to delayed fracture.

As described above, the nut 40 used as a bolt head is formed separately from the bolt shank 30. This eliminates a disadvantage that forming cannot be adequately effected in the vicinity of a bolt head, for example, at an underhead portion in conventional integrated bolt manufacturing methods. That is, deformation of a nut material can be increased in freedom when the nut 40 as a bolt head is to be formed. Thereby, it is possible to reduce deformation resistance in deforming a nut material and to improve deformability. Accordingly, a high-strength bolt head, which is difficult to be formed in the prior art, can be manufactured as the nut 40. Further, in forming the nut 40, since a small pressure is applied on a nut material when a nut material having the strength equivalent to that in the prior art is used, a forming die of the nut 40 can be significantly extended in service life.

Latch means for latching the above-mentioned nut 40 on the bolt shank 30 will be described below.

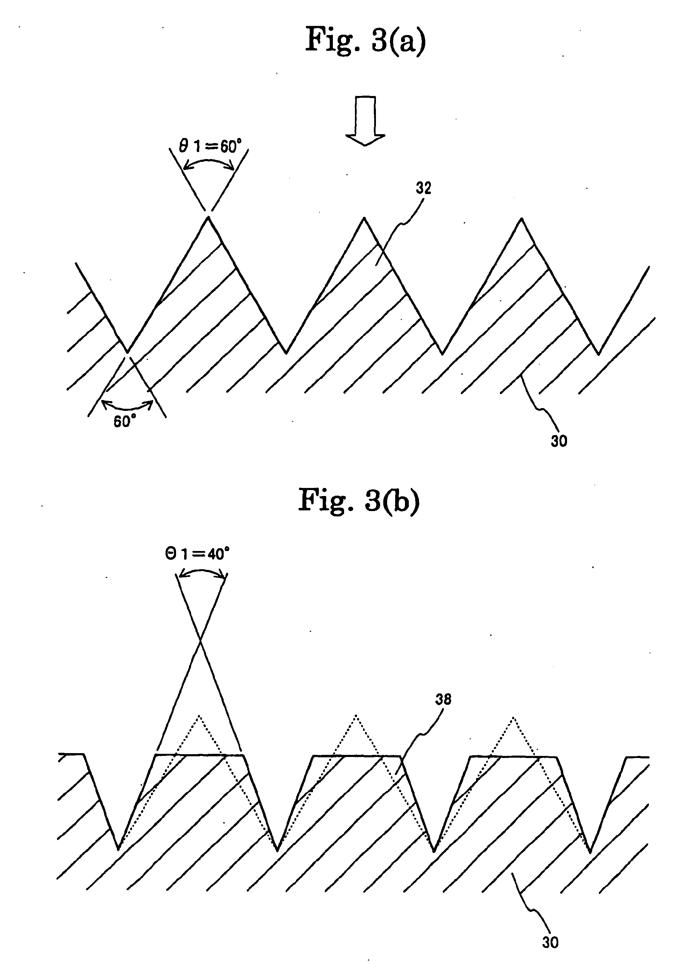

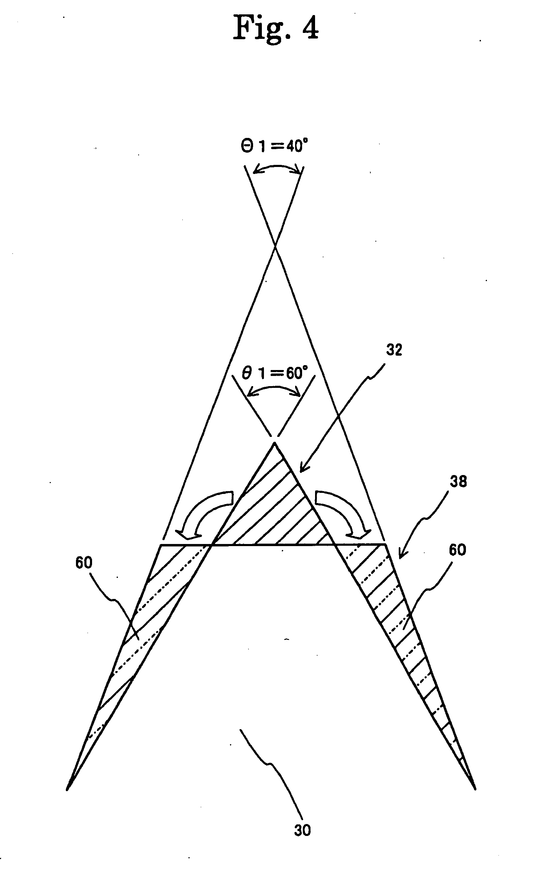

Figs. 3 and 4 show an example, in which deformed screw threads 38, formed by pressing screw threads of external threads 32 formed on the bolt shank 30, acts as a latch means for latching the nut 40 on the bolt shank 30.

The mechanism of the deformed screw threads 38 will be explained below. Here, surfaces connecting crests and roots of adjacent screw threads will be referred below to as flank.

As shown in Fig. 3 (a), screw threads (referred below to as normal screw threads) are generally formed with a screw thread angle θ1 formed between two flanks (referred below to as mountain flank) with one crest of thread therebetween and an angle formed between two flanks (referred below to as root flank) with one root therebetween amount to approximately 60°, respectively. In the normal threads, external threads are formed on a bolt side and internal threads on a nut side, whereby it becomes possible to smoothly screw the bolt shank 30 and the nut 40 together.

Meanwhile, deformed screw threads 38 can be formed by using a rolling die to press crests of the above-mentioned external threads in a radial direction of the bolt shank 30. When the crests of threads are pressed by the rolling die in a direction indicated by an arrow in Fig. 3(a), a material at the crests of threads undergoes plastic flow on slant faces on both sides of the crests of threads so that screw threads deform to expand. Such plastic flow makes a screw thread angle Θ1 of the deformed screw threads 38 approximately 40°. Such press work changes the cross sectional shape of external threads into trapezoid from triangle to form the deformed screw threads 38 as shown in Figs. 3 (a), (4) and 4.

In addition to a rolling die, press work may be also used to form the deformed screwed threads.

When the nut 40 having normal internal threads of screwed onto the bolt shank 30 having external threads composed of the above-mentioned deformed screw threads 38 with a predetermined torque, flanks of the deformed screw threads 38 and flanks of the normal screw threads press each other. Such mutual pressing of the flanks forms pressure contact portions 60 as shown in Fig. 4. Such formation of the pressure contact portions 60 can make it hard for the bolt shank 30 to move relative to the nut 40 and enables the nut 40 to latch on the bolt shank 30.

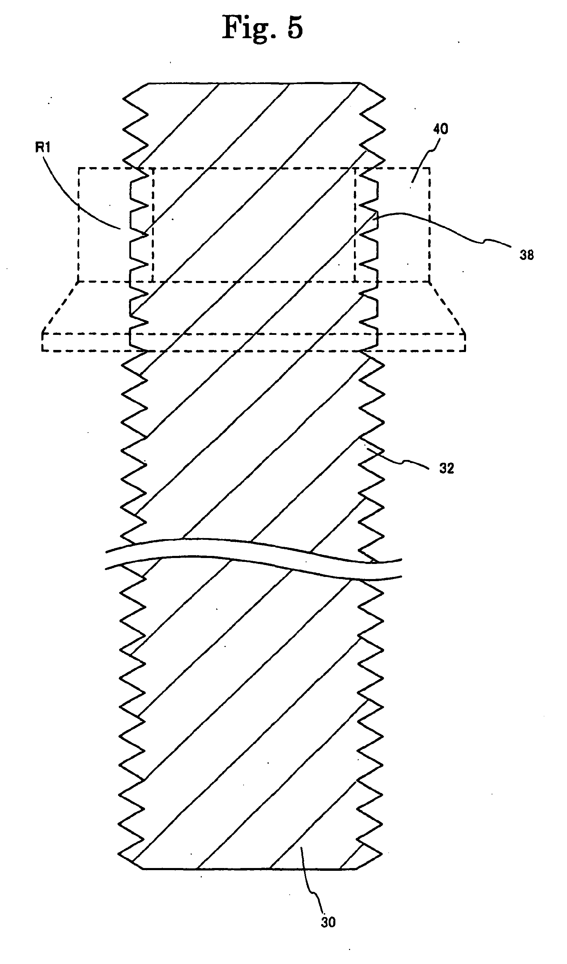

For example, as shown in Fig. 5, a deformed screw thread region R1 having the deformed screw threads 38 is provided in the vicinity of an end of the bolt shank 30. After the nut 40 shown by broken lines in Fig. 5 is screwed onto the bolt shank 30, torque is applied on the nut 40 to turn the nut 40 and to move the nut 40 until the nut 40 reaches the deformed screw thread region R1. Further, a predetermined torque is applied on the nut 40 to screw the nut 40 onto the bolt shank 30 so that internal threads of the nut 40 engage with external threads on the deformed screw thread region R1. When the internal threads of the nut 40 engage with the external threads on the deformed screw thread region R1, flanks of the deformed screw threads 38 on the bolt shank 30 press flanks of the normal screw threads of the nut 40 to form the above-mentioned pressure contact portions (not shown). Formation of the pressure contact portions can make it hard for the bolt shank 30 to move relative to the nut 40 and enables the nut 40 to latch on the deformed screw thread region R1. The deformed screw thread region R1 is formed in a desired location on the bolt shank 30 to thereby enable latching the nut 40 there.

In addition, a screw thread angle Θ1 of the above-mentioned deformed screw threads 38 is preferable within the range of 10 to 50°. When the screw thread angle Θ1 is above 10°, the pressure contact portions 60 shown in Fig. 4 become small, so that torque required for screwing the nut 40 onto the deformed screw thread region R1 decreases. Therefore, the working efficiency in mounting the nut 40 on the bolt shank 30 increases. Meanwhile, when the screw thread angle Θ1 is below 50°, the pressure contact portions 60 become large. Therefore, when the nut 40 is mounted on the bolt shank 30, it becomes liable to engage from the deformed screw thread region R1.

In addition, while the above-mentioned example is shown in the case where the deformed screw thread region R1 is provided on the bolt shank 30, the deformed screw thread region R1 may be provided on the nut 40.

With the above-mentioned structure, "A bolt comprising a bolt shank (30) formed at an outer peripheral surface thereof with external threads, and a nut (40) formed at an inner peripheral surface thereof with internal threads, comprising: a latch means (38) for latching the nut with the bolt shank, which is provided on at least one of the bolt shank and the nut, the nut being separatable from the bolt shank and capable of being screwed onto the bolt shank, wherein the nut is movable relative to the bolt shank in a state of being screwed onto the bolt shank, when a larger torque than a predetermined torque is applied to the nut while the latch means latches the nut with the bolt shank" can be realized. Also, the constitution "the latch means is provided on the bolt shank and the nut can be released from a location where the nut is latched on the bolt shank, when a larger torque than the predetermined torque is applied to the nut in the latched state" can be realized. Further, the constitution "the nut is latched on an end of the bolt shank by the latch means" can be realized. Furthermore, the constitution "the latch means comprises deformed screw threads (38) formed on the external threads or the internal threads by compressive deformation in a diametrical direction" can be realized.

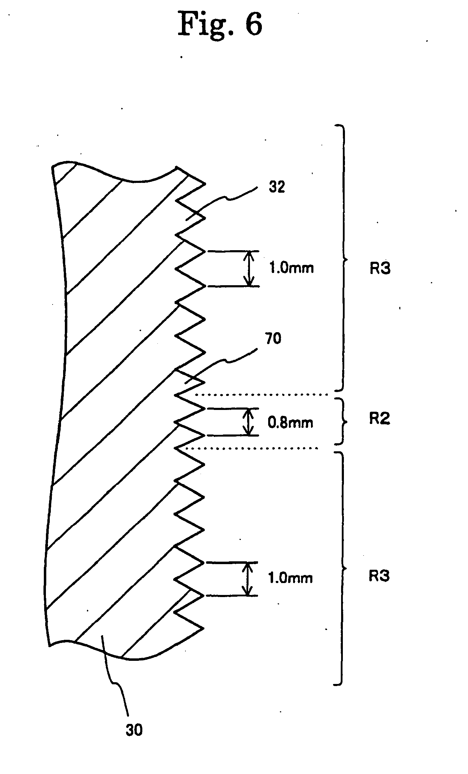

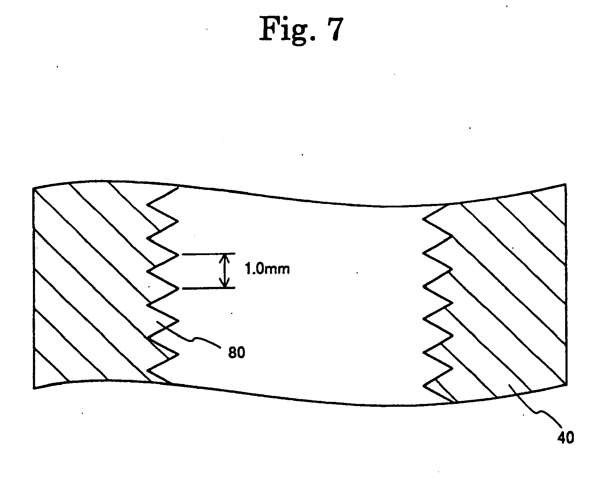

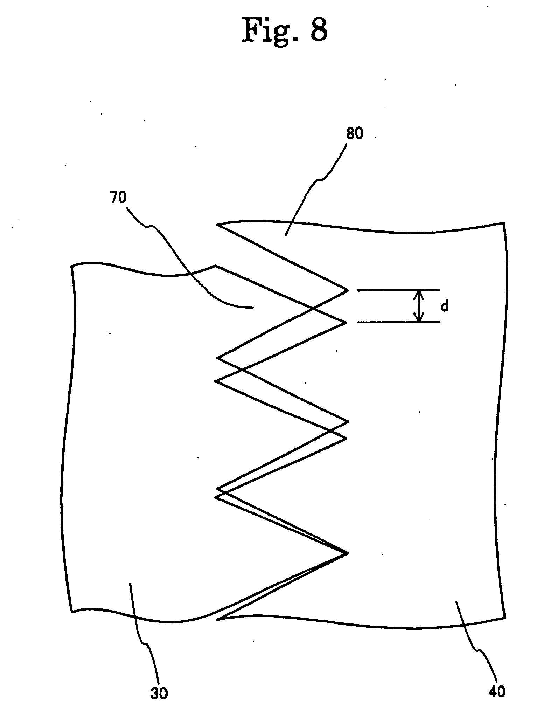

Also, an irregular pitch region R2, in which screw threads formed on a bolt shank 30 have different pitches as shown in Fig. 6, may be used as a latch means for the nut 40. Fig. 6 shows the bolt shank 30 comprising two regions, that is, a regular pitch region R3, in which screw threads 32 are formed to have a regular pitch, for example, 1.0 mm, and an irregular pitch region R2, in which screw threads 70 are formed to have an irregular pitch, for example, 0.8 mm. A pitch deviation D as shown in Fig. 8 is generated when the nut 40, on which screw threads 80 of internal threads are formed at the regular pitch of 1.0 mm as shown in Fig. 7, is screwed onto the bolt shank 30 having the irregular pitch region R2, in which external threads composed of the screw threads 70 at such irregular pitch are formed. The pitch deviation D generated by screwing causes the external threads 70 and the internal threads 80 to be mutually deformed, so that pressure contact portions (not shown) are formed, at which flanks of the external threads 70 and flanks of the internal threads 80 press each other. Formation of such pressure contact portions makes it hard for the bolt shank 30 to move relative to the nut 40, thus enabling the nut 40 latching on the bolt shank 30.

In addition, the above-mentioned way to form the irregular pitch region on the bolt shank can be implemented with the use of a rolling die in the same manner as in the case where the above-mentioned deformed screw threads 38 are formed.

The above-mentioned irregular pitch region R2 has a circumferential length corresponding to a fraction of the whole circumference but may be formed over the whole circumference. A magnitude of a difference in level between screw threads on the irregular pitch region R2 and those on the regular pitch region R3 is preferably a fraction of a pitch of the screw threads.

Moreover, while the above-mentioned example is shown, in which the irregular pitch in the irregular pitch region R2 is only 0.8 mm, screw threads of two or more pitches may be formed in the irregular pitch region R2. For example, screw threads having a pitch of 0.8 mm and 1.2 mm may be simultaneously formed the irregular pitch region R2. In this case that screw threads having pitches of 0.8 mm and 1.2 mm are formed in a irregular pitch region R2, the screw threads generally align with screw threads on the nut 40 although a partial pitch deviation generates. In addition, screw threads having pitches of 0.8 mm and 1.2 mm may be formed adjacent to or separately from each other. When the screw threads are formed separately from each other, the number of screw threads may be one or plural.

The irregular pitch region R2 may be provided on the nut 40 as well as on the bolt shank 30.

With the above-mentioned arrangement, the constitution "the external threads or the internal threads include an irregular pitch region (R2), in which screw threads have a pitch different from a predetermined pitch, and the irregular pitch region acts as the latch means" can be realized.

Also, adhesives can be used as a latch means for the nut 40. Adhesives such as thermosetting acrylic resins, epoxy resins or the like for use in locking and sealing of bolt and nut can be used. An adhesive is beforehand applied on external threads of the bolt shank 30 or internal threads of the nut 40 to provide for screwing of the bolt shank 30 and the nut 40.

Adhesives used in the invention are not limited to the above-mentioned ones. Adhesives capable of temporarily locking the bolt shank 30 and the nut 40 can be used they do not corrode the bolt shank 30 and the nut 40. When such adhesive has been cured, it is possible to make it hard for the bolt shank 30 to move relative to the nut 40 and to latch the nut 40 on the bolt shank 30 with a predetermined torque.

Also, the adhesive can be implemented by positioning a nozzle for discharing an adhesive in the vicinity of the bolt shank 30, and discharging the adhesive toward the bolt shank 30 for a predetermined period of time. By varying discharge time and quantity of an adhesive, torque required for latching the nut 40 on the bolt shank 30 can be made to have a predetermined magnitude.

With such constitution, "the latch means comprises an adhesive" can be realized.

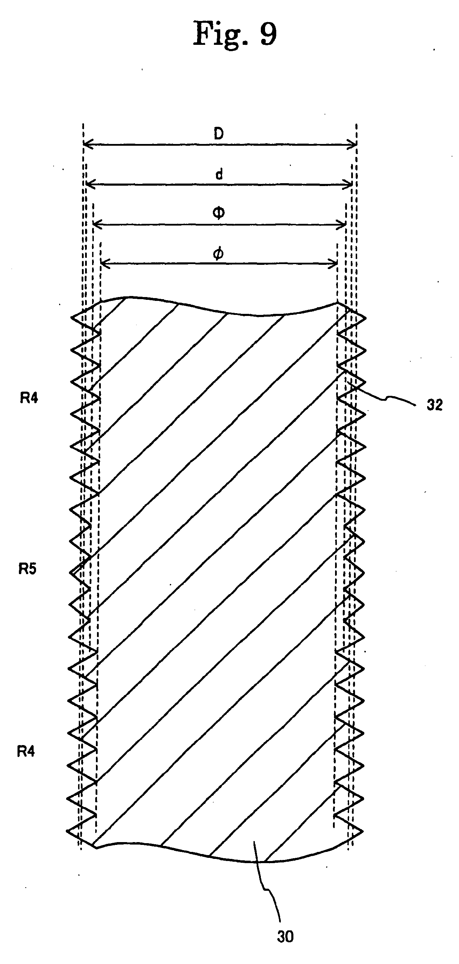

Furthermore, a latch means for the nut 40 may comprise a region, in which external threads on the bolt shank 30 and internal threads on the nut 40 are different in effective diameter of screw threads, as shown in Fig. 9.

As shown in Fig. 9, the bolt shank 30 has a regular diameter region R4 and an irregular diameter region R5. The regular diameter region R4 is provided with normal screw threads having a thread root diameter of φ. The irregular diameter region R5 is provided with screw threads having a larger thread root diameter Φ than φ. Such measures can make an effective diameter D in the irregular diameter region R5 than an effective diameter d in the regular diameter region R4.

In addition, the above-mentioned irregular diameter region R5 can be formed with the use of a rolling die.

After such bolt shank 30 is used to screw the nut 40 on the bolt shank 30, torque is applied on the nut 40 to turn the nut 40 and to move the nut 40 until the nut 40 reaches the irregular diameter region R5. Further, a predetermined torque is applied to screw the nut 40 so that internal threads on the nut 40 engage with external threads in the irregular diameter region R5. When the internal threads on the nut 40 engage with the external threads in the irregular diameter region R5, thread roots of the external threads in the irregular diameter region R5 press ridges of the internal threads on the nut 40, which forms pressure contact portions (not shown). Formation of such pressure contact portions can make it hard for the bolt shank 30 to move relative to the nut 40, thus enabling the nut 40 latching on the bolt shank 30 with a predetermined torque.

In addition, to the above-mentioned example shown in Fig. 9, the irregular diameter region R5 may be provided on the nut 40.

Such constitution can realize "the bolt shank includes an irregular diameter region (R5), in which an effective diameter of the bolt is larger than a predetermined diameter, and the irregular diameter region acts as the latch means", or "the nut includes an irregular diameter region (R5), in which an effective diameter of the nut is smaller than a predetermined diameter, and the irregular diameter region acts as the latch means" can be realized.

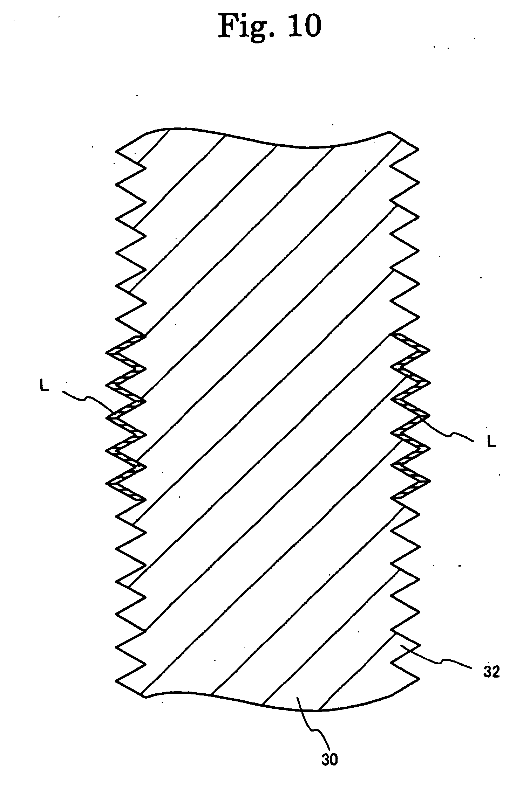

Also, a resin layer L such as special nylon may be formed on a bolt shank 30 to act as a latch means as shown in Fig. 10. Preferably, after the layer has been once formed, the resin will not fall off a location where the layer is formed, as long as it is intentionally peeled off, and besides the resin will not adhere to a member, which abuts against the thin layer. For example, typical resins are listed bearing "Nylock" (trade mark) of United States Nylock Ltd. In addition, formation of such thin layer can be made in accordance with common methods, for example, ones described in United States Patent Applications Nos. 371,604/1964; 398,495/1964; 599,042/1966; 628,683/1967; 821,178/1969; 203,130/1971; 314,854/1972; and 400,502/1973, and in United States Patent Nos. RE28, 812/1976; 3,995,074/1976; 4,054,688/1977; 4,100,882/1978; and 4,120,993/1978.

A material of the resin layer L used in the invention is not limited to the above-mentioned one. A material exhibiting elasticity, for example, an elastomer resin, a material exhibiting flexibility, and further a material exhibiting viscosity can be used. More specifically, when both flanks of the nut 40 and the bolt shank 30 come into contact with the resin layer L, a material may serve such that frictional forces, shearing stresses or the like generated by contact with the resin layer L can prevent movements of the bolt shank 30 relative to the nut 40.

In use of such bolt shank 30, after the nut 40 is screwed onto the bolt shank 30, torque is applied to the nut 40 to turn the nut 40 and to move the nut 40 until the nut 40 reaches the resin layer L. Further, a predetermined torque is applied to screw the nut 40 so that the nut 40 overlaps the resin layer L. When the internal threads of the nut 40 engage with the resin layer L, flanks of the external threads on the bolt shank 30 and flanks of the internal threads of the nut 40 press each other through the resin layer L. Such pressing causes pressure contact portions (not shown) to be formed on the resin layer L. Formation of such pressure contact portions makes it hard for the bolt shank 30 to move relative to the nut 40, and makes it possible for the nut 40 to engage with the bolt shank 30 at a predetermined torque.

The resin layer L may be provided on screw threads of the nut 40 in addition to the above-mentioned example shown in Fig. 10.

Such constitution can realize "the latch means comprises a region, in which a layer (L) of" "a special nylon resin", "an elastic body", "elastomer resin" or "a resin exhibiting elasticity and/or viscosity" is formed on screw threads of the external threads or the internal threads.

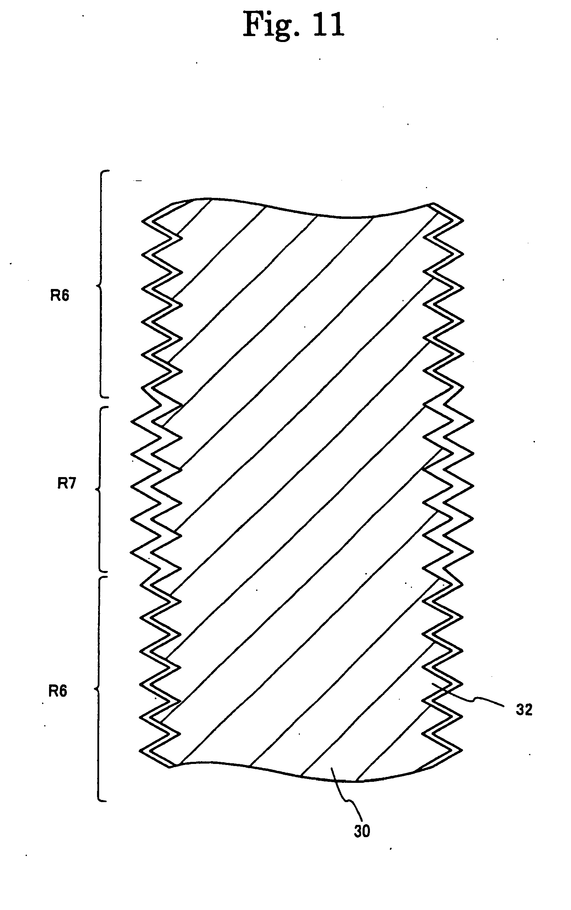

Further, the bolt shank 30 may be provided by surface treatment, as shown in Fig. 11, with a regular film thickness region R6 having an ordinary, predetermined film thickness, and an irregular film thickness region R7 having a larger film thickness than the former. Such irregular film thickness region R7 can be used as a latch means.

Such surface treatment is made in terms of outward appearance, corrosion resistance, non-conductivity or the like, and includes, for example, plating process, coating process and so on. These processes can be made by means of the following methods.

The bolt shank 30 is supported inside of a container having an opening to be rotatable in the vicinity of the opening. The opening is formed on the container such that the above-mentioned irregular film thickness region R7 and the opening are made substantially equal to each other in width. A nozzle is provided outside the container to be positioned facing an interior of the container via the opening. A processing liquid for plating process or coating process is jetted toward the opening from the nozzle. While the processing liquid is jetted, the bolt shank 30 is rotated within the container. Such processing enables forming the irregular film thickness region R7 of a predetermined length on the bolt shank 30.

The above-mentioned opening is changed in width to thereby enabling changing the width of the irregular film thickness region R7. Also, the position of the irregular film thickness region R7 can be changed by varying a location where the bolt shank 30 is supported within the container and a location of the opening. Further, the film thickness of the irregular film thickness region R7 can be changed by varying time and quantity of jet.

When the bolt shank 30 having such irregular film thickness region R7 is used, torque is applied to the nut 40 to turn the nut 40 and to move the nut 40 until the nut 40 reaches the irregular film thickness region R7 after the nut 40 is screwed onto the bolt shank 30. Further, a predetermined torque is applied to the nut 40 to screw the nut 40 so that the internal threads of the nut 40 engage with the external threads of the irregular film thickness region R7. When the internal threads of the nut 40 engage with the external threads of the irregular film thickness region R7, flanks of the external threads on the bolt shank 30 and flanks of the internal threads of the nut 40 press each other through the irregular film thickness region R7. Such pressing causes pressure contact portions (not shown) to be formed on the flanks of the external threads on the bolt shank 30, the flanks of the internal threads of the nut 40, and the irregular film thickness region R7. Formation of such pressure contact portions can make it hard for the bolt shank 30 to move relative to the nut 40, and makes it possible for the nut 40 to engage with the bolt shank 30 at a predetermined torque.

The irregular film thickness region R7 may be provided on screw threads of the nut 40 in addition to the above-mentioned example shown in Fig. 11.

Such constitution can realize "the bolt shank includes an irregular film thickness region (R7), in which the thickness of a film, which has been subjected to surface treatment, on the bolt shank is larger than a predetermined film thickness, and the irregular film thickness region acts as the latch means".

Also, formation of the above-mentioned irregular film thickness region R7 on the bolt shank 30 will lead to enlarging an effective diameter of the bolt shank 30. Therefore, such constitution can realize "the bolt shank includes an irregular diameter region (R7), in which an effective diameter of the bolt is larger than a predetermined diameter, and the irregular diameter region acts as the latch means".

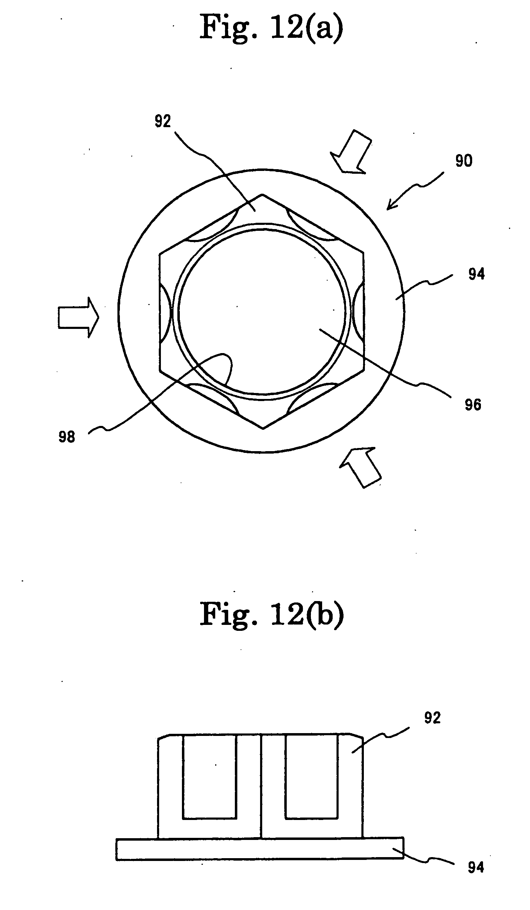

Also, a nut called a caulking nut as shown in Fig. 12 may be used as a latch means. A caulking nut 90 shown in Fig. 12 assumes the shape of a flanged hexagonal nut and comprises a hexagonal portion 92 and a flanged portion 94. A through threaded hole 96 is formed centrally of the caulking nut 90 and internal threads 98 are formed on a side of the threaded hole 96. In addition to the above-mentioned example shown in Fig. 12, a nut can be used, which can be brought into pressure contact with screw threads of a bolt shank to be latched on the bolt shank.

The threaded hole 96 is pressed and deformed by pressing three ones of sides of the hexagonal portion 92 of the caulking nut 90 toward a center of the nut as shown by three arrows in Fig. 12. Pressurized deformation of the threaded hole 96 causes smaller threaded hole 96 in the vicinity of three locations of pressing in inner diameter than prior to deformation.

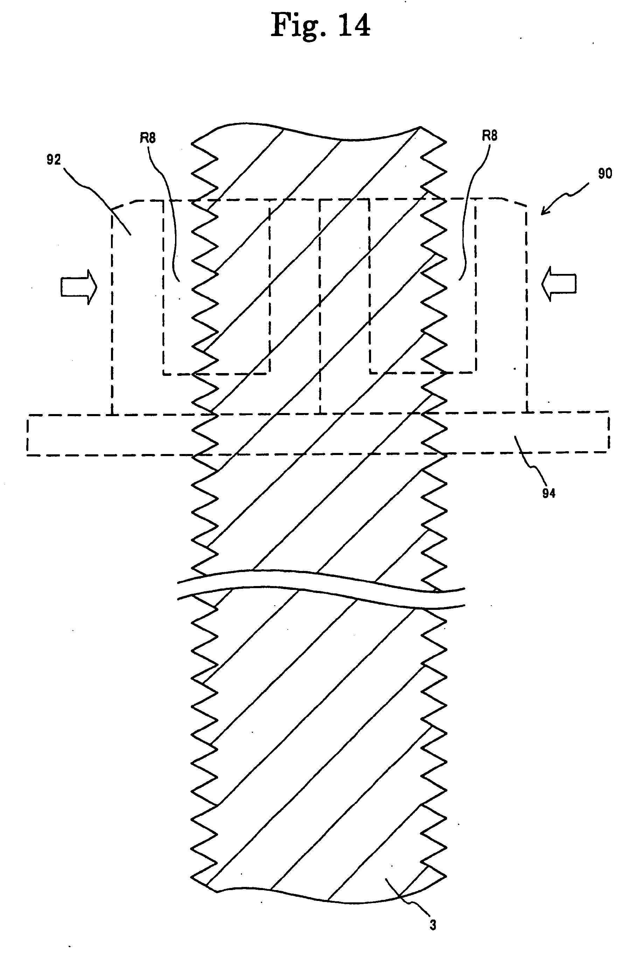

When the caulking nut 90 shown in Fig. 12 and an ordinary bolt shank 30, torque is applied to the caulking nut 90 to turn the nut 40 and to move the nut 40 until the caulking nut 90 reaches a desired location on the bolt shank 30 after the caulking nut 90 is screwed onto the bolt shank 30. Thereafter, forces are applied to the sides of the caulking nut 90 to cause pressurized deformation of the threaded hole 96 of the caulking nut. When the threaded hole 96 of the caulking nut is subjected to pressurized deformation, screw threads of the internal threads on the caulking nut 90 press screw threads of the external threads on the bolt shank 30 at R8 shown in Fig. 14. Such pressing causes pressure contact portions (not shown) to be formed on the screw threads of the external threads on the bolt shank 30 and the screw threads of the internal threads on the caulking nut 90. Formation of such pressure contact portions can make it hard for the bolt shank 30 to move relative to the nut 40, and makes it possible for the nut 40 to engage with the bolt shank 30 at a predetermined torque.

Such constitution can realize "the latch means comprises a portion or portions (96), which are capable of pressurized deformation and at which forces applied on the nut cause the inner peripheral surface of the nut to be subjected to pressurized deformation to be able to press the bolt shank".

Since the bolt shank having the above-mentioned latch means can be fabricated separately from a nut constituting a bolt head, the problem caused in forming a integrated bolt, that is, a bolt head is gradually hardened as it is being fabricated can be solved. Therefore, it is possible to use a material, which has been beforehand made high in strength, as a bar material for a bolt head, and to make a bolt shank high in strength as it is being fabricated.

Such constitution can realize "the bolt is a high-strength bolt (30)".

By using a bolt of the invention having a bolt shank, on which a nut is latched by means of the above-mentioned latch means, a mounted member can be simply mounted on a mount member.

The bolt shank 30 is put into a state, in which it is beforehand latched on the nut 40. Also, a first member 10 being a mounted member is beforehand provided with a bolt insertion hole 12 extending therethrough. Further, a second member 20 being a mount member is beforehand provided with an internally threaded hole 22, on which internal threads are formed.

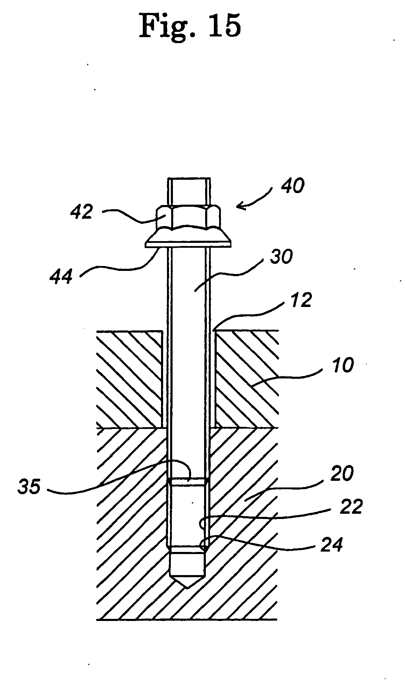

As shown in Fig. 15, while maintaining a state, in which the bolt shank 30 is latched on the nut 40, the bolt shank 30 is inserted into the bolt insertion hole 12 of the first member 10 being a mounted member. Further, a tool is used to apply a predetermined torque on the nut 40 constituting a bolt head to screw the bolt shank 30 into the internally threaded hole 22 of the second member 20 being a mount member with the bolt shank 30 latched on the nut 40. Subsequently, the bolt shank 30 is further screwed until a tip end 35 of the bolt shank 30 reaches a bottom 24 of the internally threaded hole. When the tip end 35 of the bolt shank 30 reaches the bottom 24 of the internally threaded hole, screwing of the bolt shank 30 into the internally threaded hole 22 has been completed.

Thereafter, the latched state of the bolt shank 30 and the nut 40 is released when a larger torque than the above-mentioned predetermined torque is applied to the nut 40 constituting a bolt head to turn the same. When the latched state is released, the nut 40 separates from a location where it is latched on the bolt shank 30. Torque is also applied to the nut 40 even after the nut 40 has separated, and then the nut 40 is moved relative to the bolt shank 30 while being screwed onto the bolt shank 30. After the nut 40 is moved until a seat surface 44 on the nut 40 is seated on a top surface of the first member 10, torque is further applied to the nut 40 to turn the same, thus clamping the nut 40 on the first member 10. By performing such clamping, the first member 10 can be clamped on the second member 20 through the bolt shank 30.

Such method can realize "a method of using a bolt to clamp a first member (10) formed with a bolt insertion hole (12) extending therethrough and a second member (20) formed with an internally threaded hole (22) having a bottom, the bolt comprising a nut (40) and a bolt shank (30) described in any one of claims 1 to 16, the nut being latched on the bolt shank, the method comprising: a step for applying a torque on the nut until the bolt shank is screwed into the internally threaded hole of the second member through the bolt insertion hole of the first member to have a tip end (35) of the bolt shank reaching the bottom, and a step for moving the nut relative to the bolt shank in a state, in which the nut is screwed onto the bolt shank, and for applying a torque on the nut until the nut reaches the first member".

While the bolt shank 30 illustrated in the above-mentioned example is formed over an entire outer peripheral surface thereof with external threads, a bolt may be used to have a thread non-formed region, in which external threads are not formed on a part of the bolt.

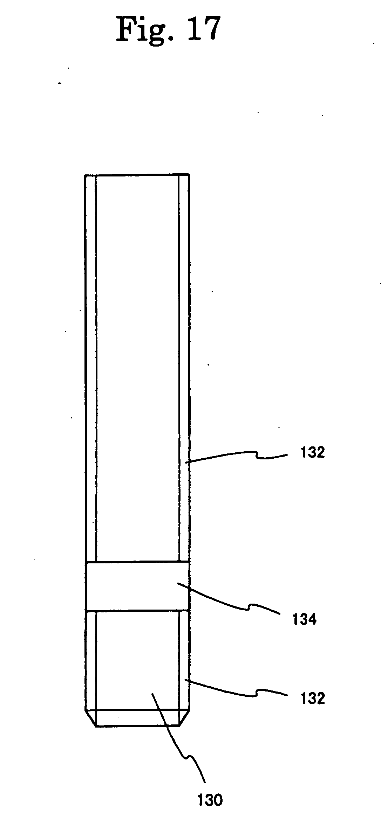

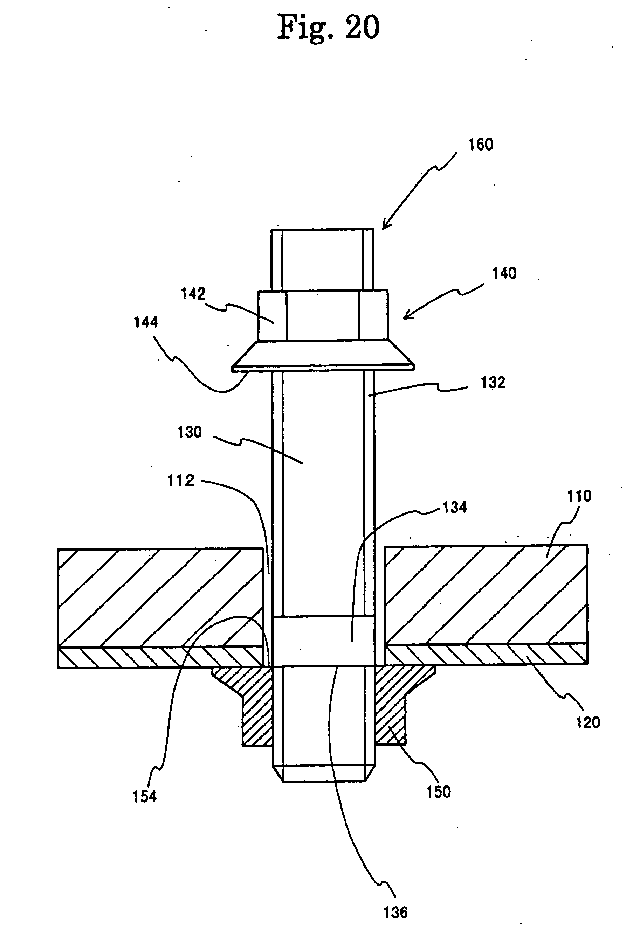

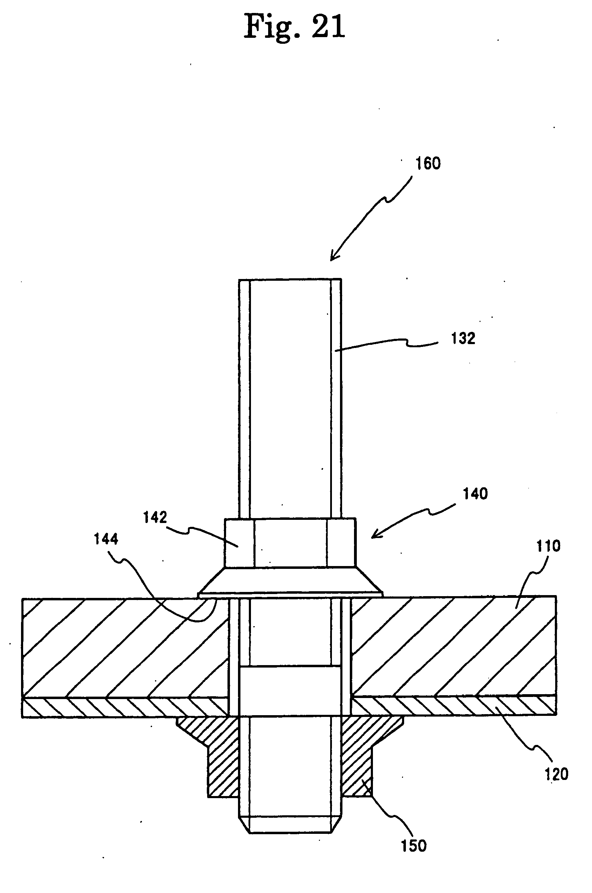

Fig. 17 shows an example of a bolt shank 130 having a thread non-formed region. The bolt shank 130 has a region, in which external threads 132 are formed on an outer peripheral surface of the bolt shank, and a thread non-formed region 134, in which external threads are not formed. With the bolt shank shown in Fig. 17, the thread non-formed region 134 is provided below a center of the bolt shank 130. The thread non-formed region 134 has a larger diameter than an effective diameter of the external threads 132 whereby a nut (not shown) can be prevented from moving further when the nut is screwed onto the bolt shank 130 and screw threads of the nut reach an end of the thread non-formed region 134. For example, as shown in Figs. 20 and 21 described later, a nut 150 is screwed onto the bolt shank 130 from a lower end thereof to be moved upward. When a top surface 154 of the nut 150 abuts against a lower end 136 of the thread non-formed region 134, the nut 150 cannot be further moved upward, so that it is possible to fix the nut 150 on the bolt shank 130.

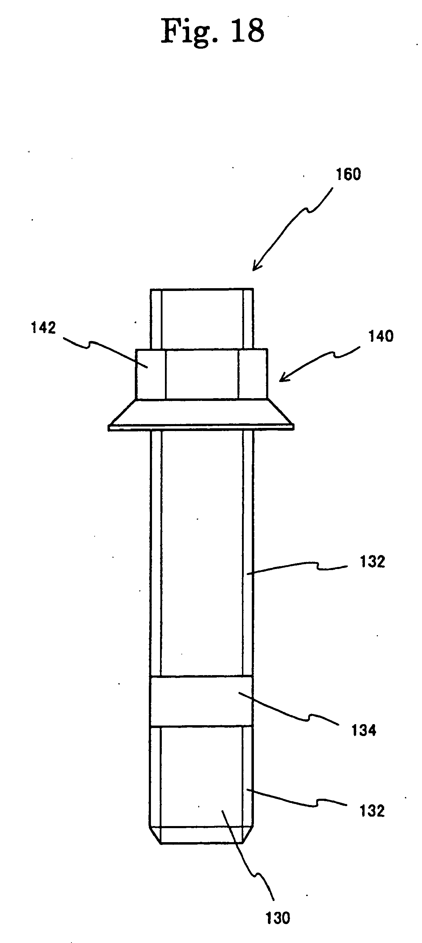

A latch means illustrated in the above-mentioned example is used to latch a nut 140 on a bolt shank having the thread non-formed region 134, thus forming beforehand a bolt 160 shown in Fig. 18.

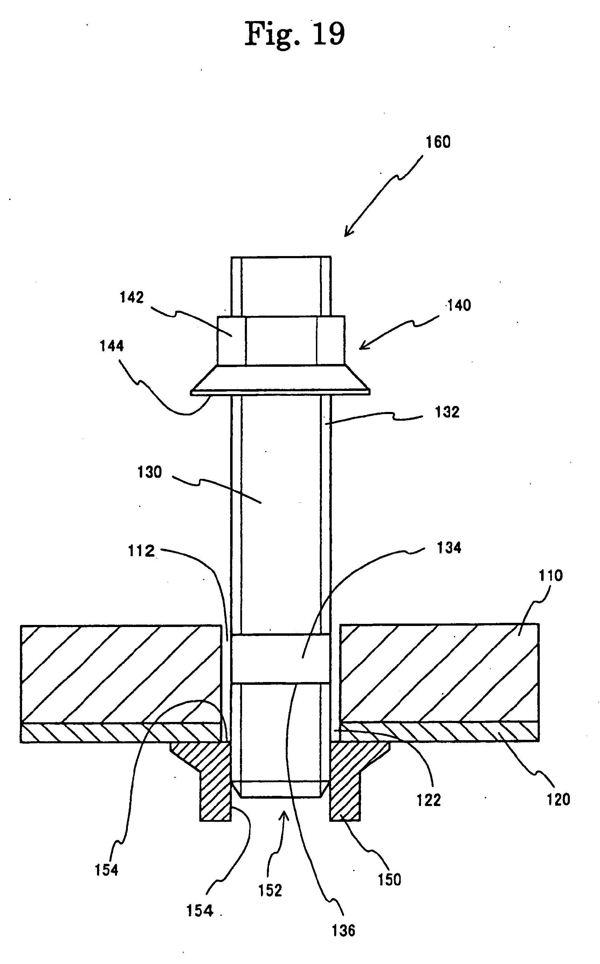

Figs. 19 to 21 show a manner, in which a third member 110 being a mounted member is clamped on a fourth member 120 being a mount member with the use of the bolt 160 having the nut 140 latched on the bolt shank 140. In addition, with this example, the mounted member 110 is beforehand provided with a bolt insertion hole 112 extending therethrough, and the mount member 120 is beforehand provided with a bolt insertion hole 122 extending therethrough. Also, the mount member 120 is beforehand provided at an underside thereof with the nut 150. The nut 150 is provided with an internally threaded hole 152, which is formed at an inner peripheral surface thereof with internal threads 154.

In addition, methods as by welding and an adhesive can be used as a method of providing the nut 150 on the mount member 120. Such method is used to provide the nut 150 on the mount member 120 whereby the bolt according to the invention is used to clamp the mounted member 110 on the mount member 120 in the case where it is not possible to form screw threads directly on the mount member 120, for example, in the case where the mount member 120 is thin.

As shown in Fig. 19, while maintaining a state, in which the bolt shank 130 is latched on the nut 140, the bolt shank 130 of the bolt 160 is inserted into the bolt insertion hole 112 of the third member 110 being a mounted member. Subsequently, a tool is used to apply a predetermined torque on a bolt head 142 to screw the bolt shank 130 into the internally threaded hole 152 of the nut 150, which is provided on an underside of the fourth member 120 being a mount member, with the bolt shank 130 latched on the nut 140.

Subsequently, while maintaining the latched state of the bolt shank 30 and the nut 40, the bolt shank 30 is further screwed until the lower end 136 of the thread non-formed region 134 abuts against the top surface 154 of the nut 150. As shown in Fig. 20, when the lower end 136 of the thread non-formed region 134 of the bolt shank 30 reaches the top surface 154 of the nut 150, screwing of the bolt shank 130 into the internally threaded hole 152 has been completed.

Thereafter, the latched state of the bolt shank 130 and the nut 140 is released when a larger torque than the above-mentioned predetermined torque is applied to the bolt head 142 to turn the bolt shank. When the latched state is released, the bolt head 142 separates from a location where it is latched on the bolt shank 130. Torque is also applied to the bolt head 142 after the bolt head 142 has separated, and then the bolt head 142 is moved relative to the bolt shank 130 while being screwed onto the bolt shank 130. After the bolt head 142 is moved until a seat surface 144 on the bolt head 142 is seated on a top surface of the third member 110, torque is further applied to the bolt head 142 to turn the same, thus clamping the bolt head 142 on the third member 110. By performing such clamping, the third member 110 can be clamped on the fourth member 120 through the bolt shank 130.

In addition, while the above-mentioned example is illustrated, in which the nut 150 is beforehand provided on the fourth member 120 being a mount member, a worker may support the nut 140 with a tool to perform the clamping work when the third member 110 being a mounted member is to be clamped on the fourth member 120 being a mount member.

As described above, the bolt according to the invention comprises a bolt shank and a nut constituting a bolt head, the bolt shank and the nut being separate from each other and manufactured in separate steps. Thereby, it is possible to eliminate a disadvantage that forming in the vicinity of a bolt head, for example, in an underneck area cannot be adequately performed in conventional bolt manufacture methods, in which a bolt head and a bolt shank are formed integrally.

Also, a material for nuts can be increased in freedom of deformation in forming a nut acting as a bolt head of the bolt according to the invention. Thereby, it is possible to reduce deformation resistance of a material for nuts and to improve deformability.

A bolt head of high strength having been difficult to form in the conventional art can be manufactured in the form of a nut. Further, in the case of using a material for nuts with the strength equivalent to that in the conventional art when a nut is to be formed, only application of small pressures on a material for nuts enables forming of the material for nuts, which can greatly extend the service life of a forming die for forming of nuts.

Also, a bolt shank of the bolt according to the invention can be manufactured only by subjecting a steel wire, which has been cut to a predetermined length, rolling work to form external threads. It is possible to use a bar wire having a higher strength than that of that bar wire, which can be used in forming a bolt head and a bolt shank integrally. Therefore, the bolt shank can be made exceedingly higher in strength than in the conventional art, resulting in the realization of the smaller size and lightweight which provides a spatial margin.

Further, a nut latch means such as deformed thread ridges is provided on at least one of external threads of the bolt shank and internal threads of the nut, the bolt can be handled in the same manner as conventional bolts, so that the bolt screwing work can be easily performed without the need of any special tool. Management of parts can be easily made since the bolt can be handled in the same manner as conventional bolts when the nut is latched on the bolt shank.

## Claims

1. A bolt comprising a bolt shank (30) formed at an outer peripheral surface thereof with external threads, and a nut (40) acting as a bolt head and formed at an inner peripheral surface thereof with internal threads and having a torque transmitting portion (42) at an outer surface thereof, comprising
a latch means for latching the nut with the bolt shank, which is provided on at least one of the bolt shank and the nut, the nut being separatable from the bolt shank and capable of being screwed onto the bolt shank,
wherein the nut is movable relative to the bolt shank in a state of being screwed onto the bolt shank, when a larger torque than a predetermined torque is applied to the nut while the latch means latches the nut with the bolt shank.

2. The bolt according to claim 1, wherein the latch means is provided on the bolt shank and the nut can be released from a location where the nut is latched on the bolt shank, when a larger torque than the predetermined torque is applied to the nut in the latched state.

3. The bolt according to claim 1, or 2, wherein the nut is latched on an end of the bolt shank by the latch means.

4. The bolt according to claim 1, 2 or 3, wherein the bolt is a high-strength bolt.

5. The bolt according to one of claims 1 to 4, wherein the latch means comprises deformed screw threads (38) formed on the external threads (32) or the internal threads by compressive deformation in a diametrical direction.

6. The bolt according to one of claims 1 to 4, wherein the bolt shank includes an irregular diameter region (R5), in which an effective diameter of the bolt is larger than a predetermined diameter, and the irregular diameter region (R5) acts as the latch means.

7. The bolt according to one of claims 1 to 4, wherein the nut includes an irregular diameter region (R5), in which an effective diameter of the nut is smaller than a predetermined diameter, and the irregular diameter region (R5) acts as the latch means.

8. The bolt according to one of claims 1 to 4, wherein the external threads or the internal threads include an irregular pitch region (R2), in which screw threads have a pitch different from a predetermined pitch, and the irregular pitch region acts as the latch means.

9. The bolt according to claim 1, wherein the latch means comprises an adhesive.

10. The bolt according to claim 1, wherein the latch means comprises a region, in which a layer of a special nylon resin is formed on screw threads of the external threads or the internal threads.

11. The bolt according to claim 1, wherein the latch means comprises a region, in which a layer of an elastic body is formed on screw threads of the external threads or the internal threads.

12. The bolt according to claim 1, wherein the latch means comprises a region, in which a layer (L) of elastomer resin is formed on screw threads of the external threads or the internal threads.

13. The bolt according to claim 1, wherein the latch means comprises a region, in which a layer of a resin exhibiting elasticity and/or viscosity is formed on screw threads of the external threads or the internal threads.

14. The bolt according to claim 1, wherein the latch means comprises a region, in which a layer of a flexible resin is formed on screw threads of the external threads or the internal threads.

15. The bolt according to claim 1, wherein the bolt shank includes an irregular film thickness region (R7), in which the thickness of a film, which has been subjected to surface treatment, on the bolt shank is larger than a predetermined film thickness, and the irregular film thickness region (R7) acts as the latch means.

16. The bolt according to claim 1, wherein the latch means comprises a portion or portion (96), which are capable of pressurized deformation and at which forces applied on the nut cause the inner peripheral surface of the nut to be subjected to pressurized deformation to be able to press the bolt shank.

17. A method of using a bolt to clamp a first member formed with a bolt insertion hole extending therethrough and a second member formed with an internally threaded hole having a bottom, the bolt comprising a nut (40) and a bolt shank (30) described in any one of claims 1 to 16, the nut being latched on the bolt shank, the method comprising:
a step for applying a torque on the nut until the bolt shank is screwed into the internally threaded hole of the second member through the bolt insertion hole of the first member to have a tip end of the bolt shank reaching the bottom, and
a step for moving the nut relative to the bolt shank in a state, in which the nut is screwed onto the bolt shank, and for applying a torque on the nut until the nut reaches the first member.

## Patentansprüche

1. Schraube mit einem Schraubenschaft (30), der an seiner Außenumfangsfläche mit Außengewinde ausgebildet ist, und einer Mutter (40), die als Schraubenkopf wirkt und an ihrer Innenumfangsfläche mit Innengewinde ausgebildet ist und einen Drehmomentübertragungsteil (42) an ihrer Außenfläche aufweist, umfassend:
eine Verriegelungseinrichtung zum Verriegeln der Mutter mit dem Schraubenschaft, welche auf dem Schraubenschaft und/oder auf der Mutter vorgesehen ist, wobei die Mutter vom Schraubenschaft trennbar ist und auf den Schraubenschaft geschraubt werden kann,
wobei die Mutter in einem auf den Schraubenschaft geschraubten Zustand relativ zum Schraubenschaft beweglich ist, wenn ein größeres Drehmoment als ein vorbestimmtes Drehmoment auf die Mutter ausgeübt wird, während die Verriegelungseinrichtung die Mutter mit dem Schraubenschaft verriegelt.

2. Schraube nach Anspruch 1, wobei die Verriegelungseinrichtung auf dem Schraubenschaft vorgesehen ist und die Mutter von einer Stelle gelöst werden kann, an der die Mutter auf dem Schraubenschaft verriegelt ist, wenn ein größeres Drehmoment als das vorbestimmte Drehmoment auf die im verriegelten Zustand befindliche Mutter ausgeübt wird.

3. Schraube nach Anspruch 1 oder 2, wobei die Mutter mittels der Verriegelungseinrichtung auf einem Ende des Schraubenschafts verriegelt ist.

4. Schraube nach Anspruch 1, 2 oder 3, wobei die Schraube eine hochfeste Schraube ist.

5. Schraube nach einem der Ansprüche 1 bis 4, wobei die Verriegelungseinrichtung verformte Gewindegänge (38) umfasst, die durch Druckverformung in einer diametralen Richtung auf dem Außengewinde (32) oder dem Innengewinde ausgebildet sind.

6. Schraube nach einem der Ansprüche 1 bis 4, wobei der Schraubenschaft einen Bereich mit irregulärem Durchmesser (R5) enthält, in dem ein wirksamer Durchmesser der Schraube größer als ein vorbestimmter Durchmesser ist, und der Bereich mit irregulärem Durchmesser (R5) als die Verriegelungseinrichtung wirkt.

7. Schraube nach einem der Ansprüche 1 bis 4, wobei die Mutter einen Bereich mit irregulärem Durchmesser (R5) enthält, in dem ein wirksamer Durchmesser der Mutter kleiner als ein vorbestimmter Durchmesser ist, und der Bereich mit irregulärem Durchmesser (R5) als die Verriegelungseinrichtung wirkt.

8. Schraube nach einem der Ansprüche 1 bis 4, wobei das Außengewinde oder das Innengewinde einen Bereich mit irregulärem Durchmesser (R2) enthält, in dem Gewindegänge eine von einer vorbestimmten Ganghöhe verschiedene Ganghöhe haben, und der Bereich mit irregulärem Durchmesser als die Verriegelungseinrichtung wirkt.

9. Schraube nach Anspruch 1, wobei die Verriegelungseinrichtung einen Klebstoff umfasst.

10. Schraube nach Anspruch 1, wobei die Verriegelungseinrichtung einen Bereich umfasst, in dem eine Schicht eines speziellen Nylonharzes auf Gewindegängen des Außengewindes oder des Innengewindes ausgebildet ist.

11. Schraube nach Anspruch 1, wobei die Verriegelungseinrichtung einen Bereich umfasst, in dem eine Schicht eines elastischen Körpers auf Gewindegängen des Außengewindes oder des Innengewindes ausgebildet ist.

12. Schraube nach Anspruch 1, wobei die Verriegelungseinrichtung einen Bereich umfasst, in dem eine Schicht (LL) eines Elastomerharzes auf Gewindegängen des Außengewindes oder des Innengewindes ausgebildet ist.

13. Schraube nach Anspruch 1, wobei die Verriegelungseinrichtung einen Bereich umfasst, in dem eine Schicht eines Harzes, das Elastizität und/oder Viskosität zeigt, auf Gewindegängen des Außengewindes oder des Innengewindes ausgebildet ist.

14. Schraube nach Anspruch 1, wobei die Verriegelungseinrichtung einen Bereich umfasst, in dem eine Schicht eines flexiblen Harzes auf Gewindegängen des Außengewindes oder des Innengewindes ausgebildet ist.

15. Schraube nach Anspruch 1, wobei der Schraubenschaft einen Bereich mit irregulärer Filmdicke (R7) enthält, in dem die Dicke eines Films, der einer Oberflächenbehandlung unterzogen worden ist, auf dem Schraubenschaft größer als eine vorbestimmte Filmdicke ist, und der Bereich mit irregulärer Filmdicke (R7) als die Verriegelungseinrichtung wirkt.

16. Schraube nach Anspruch 1, wobei die Verriegelungseinrichtung einen Teil oder Teile (96) umfasst, die zu Druckverformung im Stande sind und an denen auf die Mutter ausgeübte Kräfte bewirken, dass die Innenumfangsfläche der Mutter Druckverformung unterworfen wird, um den Schraubenschaft pressen zu können.

17. Verfahren zur Verwendung einer Schraube zum Festspannen eines ersten Gliedes, das mit einem **dadurch** hindurch verlaufenden Schraubeneinführloch ausgebildet ist, und eines zweiten Gliedes, das mit einem Innengewindeloch mit einem Boden ausgebildet ist, wobei die Schraube eine Mutter (40) und einen Schraubenschaft (30) wie in einem der Ansprüche 1 bis 16 beschrieben umfasst, wobei die Mutter auf dem Schraubenschaft verriegelt ist, wobei das Verfahren umfasst:
einen Schritt zur Ausübung eines Drehmoments auf die Mutter, bis der Schraubenschaft durch das Schraubeneinführloch des ersten Gliedes in das Innengewindeloch des zweiten Gliedes geschraubt ist, so dass ein äußerstes Ende des Schraubenschafts den Boden erreicht, und
einen Schritt zur Bewegung der Mutter relativ zum Schraubenschaft in einem Zustand, in dem die Mutter auf den Schraubenschaft geschraubt ist, und zur Ausübung eines Drehmoments auf die Mutter, bis die Mutter das erste Glied erreicht.

## Revendications

1. Boulon comprenant une tige de boulon (30) formée à une surface périphérique extérieure de celui-ci avec des filets externes, et un écrou (40) agissant en tant que tête de boulon et formé à une surface périphérique intérieure de celui-ci avec des filets internes et ayant une portion de transmission de couple (42) à une surface extérieure de celui-ci, comprenant
un moyen de verrouillage pour verrouiller l'écrou avec la tige de boulon, qui est disposé sur au moins l'un de la tige de boulon et de l'écrou, l'écrou étant séparable de la tige de boulon et capable d'être vissé sur la tige de boulon,
dans lequel l'écrou est mobile par rapport à la tige de boulon dans un état d'être vissé sur la tige de boulon, lorsqu'un couple supérieur à un couple prédéterminé est appliqué à l'écrou tandis que le moyen de verrouillage verrouille l'écrou avec la tige de boulon.

2. Boulon selon la revendication 1, dans lequel le moyen de verrouillage est prévu sur la tige de boulon et l'écrou peut être libéré d'un emplacement où l'écrou est verrouillé sur la tige de boulon, lorsqu'un couple supérieur à un couple prédéterminé est appliqué à l'écrou à l'état verrouillé.

3. Boulon selon la revendication 1 ou 2, dans lequel l'écrou est verrouillé sur une extrémité de la tige de boulon par le moyen de verrouillage.

4. Boulon selon la revendication 1, 2 ou 3, dans lequel le boulon est un boulon à haute résistance.

5. Boulon selon l'une des revendications 1 à 4, dans lequel le moyen de verrouillage comprend des filets de vis déformés (38) formés sur les filets externes (32) ou les filets internes par déformation en compression dans une direction diamétrale.

6. Boulon selon l'une des revendications 1 à 4, dans lequel la tige de boulon inclut une région de diamètre irrégulier (R5), dans laquelle un diamètre utile du boulon est plus grand qu'un diamètre prédéterminé, et la région de diamètre irrégulier (R5) agit en tant que moyen de verrouillage.

7. Boulon selon l'une des revendications 1 à 4, dans lequel l'écrou inclut une région de diamètre irrégulier (R5), dans laquelle un diamètre utile de l'écrou est plus petit qu'un diamètre prédéterminé, et la région de diamètre irrégulier (R5) agit en tant que moyen de verrouillage.

8. Boulon selon l'une des revendications 1 à 4, dans lequel les filets externes ou les filets internes incluent une région de pas irrégulier (R2), dans laquelle les filets de vis ont un pas différent d'un pas prédéterminé, et la région de pas irrégulier agit en tant que moyen de verrouillage.

9. Boulon selon la revendication 1, dans lequel le moyen de verrouillage comprend un adhésif.

10. Boulon selon la revendication 1, dans lequel le moyen de verrouillage comprend une région, dans laquelle une couche d'une résine nylon spéciale est formée sur les filets de vis des filets externes ou des filets internes.

11. Boulon selon la revendication 1, dans lequel le moyen de verrouillage comprend une région, dans laquelle une couche d'un corps élastique est formée sur les filets de vis des filets externes ou des filets internes.

12. Boulon selon la revendication 1, dans lequel le moyen de verrouillage comprend une région, dans laquelle une couche (L) de résine élastomère est formée sur les filets de vis des filets externes ou des filets internes.

13. Boulon selon la revendication 1, dans lequel le moyen de verrouillage comprend une région, dans laquelle une couche d'une résine montrant une élasticité et/ou une viscosité est formée sur les filets de vis des filets externes ou des filets internes.

14. Boulon selon la revendication 1, dans lequel le moyen de verrouillage comprend une région, dans laquelle une couche d'une résine flexible est formée sur les filets de vis des filets externes ou des filets internes.

15. Boulon selon la revendication 1, dans lequel la tige de boulon inclut une région d'épaisseur de film irrégulière (R7), dans laquelle l'épaisseur d'un film, qui a été soumis à un traitement de surface, sur la tige de boulon est supérieure à une épaisseur de film prédéterminée, et la région d'épaisseur de film irrégulière (R7) agit en tant que moyen de verrouillage.

16. Boulon selon la revendication 1, dans lequel le moyen de verrouillage comprend une portion ou des portions (96), qui sont capables d'une déformation par pression et auxquelles des forces appliquées sur l'écrou font que la surface périphérique intérieure de l'écrou est soumise à déformation par pression pour pouvoir presser la tige de boulon.

17. Procédé d'utilisation d'un boulon pour immobiliser un premier élément formé avec un trou d'insertion de boulon s'étendant à travers celui-ci et un deuxième élément formé avec un trou fileté intérieurement ayant un fond, le boulon comprenant un écrou (40) et une tige de boulon (30) décrits dans l'une quelconque des revendications 1 à 16, l'écrou étant verrouillé sur la tige de boulon, le procédé comprenant :
une étape d'application d'un couple sur l'écrou jusqu'à ce que la tige de boulon soit vissée dans le trou fileté intérieurement du deuxième élément à travers le trou d'insertion de boulon du premier élément pour avoir une extrémité de pointe de la tige de boulon atteignant le fond, et
une étape de déplacement de l'écrou par rapport à la tige de boulon en un état, dans lequel l'écrou est vissé sur la tige de boulon, et d'application d'un couple sur l'écrou jusqu'à ce que l'écrou atteigne le premier élément.
